# EUROPEAN PATENT APPLICATION

(11) **EP 2 159 923 A2**
(43) Date of publication of application: **03.03.2010**
(21) Application number: 09168711.1
(22) Date of filing: 26.08.2009
(51) Int. Cl.: H04B 1/52

(54) **High frequency device**

(30) Priority: 28.08.2008 JP 2008219162; 16.09.2008 JP 2008236082
(71) Applicant: Panasonic Corporation, Kadoma-shi Osaka 571-8501 (JP)
(72) Inventor: Yamada, Takashi, Osaka-shi Osaka 540-6207 (JP); Nanba, Hideki, Osaka-shi Osaka 540-6207 (JP); Takano, Shinji, Osaka-shi Osaka 540-6207 (JP); Nakamura, Toshiaki, Osaka-shi Osaka 540-6207 (JP); Asakawa, Yasuteru, Osaka-shi Osaka 540-6207 (JP); Kitagawa, Motoyoshi, Osaka-shi Osaka 540-6207 (JP)
(74) Representative: Grünecker, Kinkeldey, Stockmair & Schwanhäusser Anwaltssozietät

(57) **Abstract**

A high frequency device includes an antenna connector adapted to be connected with an antenna, a board, a conductor layer provided on an upper surface of the board, a filter mounted on the upper surface of the board and connected with the antenna connector, and a high frequency circuit mounted on a lower surface of the board and connected with the filter. The filter includes a case having a hollow shape having an opening which opens downward, and a resonator accommodated in the case. The case has a lower end around the opening. The lower end of the case is joined to the conductor layer. The high frequency device has a small size.

## Description

### FIELD OF THE INVENTION

The present invention relates to a high frequency device for use in a base station for communications.

### BACKGROUND OF THE INVENTION

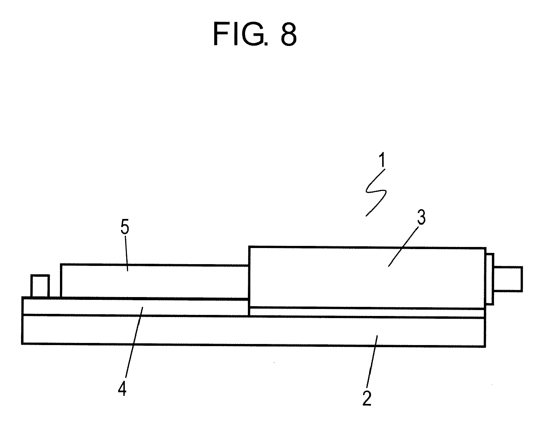

Fig. 8 is a side view of a conventional high frequency device 1. The high frequency device 1 is adapted to be installed in a base station for bidirectional communications, such as mobile telephone service, and includes a filter 3 for receiving and a board 4 mounted on an upper surface of a flat mounting plate 2. The board 4 is a double-sided circuit board and covered with a copper foil entirely on a lower surface thereof.

A high frequency circuit is provided on the upper surface of the board 4. The high frequency circuit includes a power amplifier (PA) for transmitting and a low noise amplifier (LNA) for receiving and a controller for controlling the PA and LNA. A cover 5 made of metal covers the high frequency circuit to shield the high frequency circuit.

Amplifiers, such as the PA and LNA, generate a large amount of heat, and are fixed directly onto the flat mounting board 2 for dissipating the heat generated by the amplifiers. Alternatively, while the heat generated by the amplifiers are dissipated from plural through-holes provided directly beneath the amplifiers in the board 4, the copper foil on the lower surface of the board 4 contact the flat mounting board 2. The lower surface of the flat mounting board 2 is then joined with a heat sink for dissipating the heat from the amplifiers.

In order to respond to the rapid spread of mobile telephones, the introduction of advanced communications systems, and the extension of communications service areas, the number of base stations or facilities is required to increase. Increasing the number of base stations or facilities however involves the acquirement or the extension of their installation locations. High frequency apparatuses designed for use in the base stations is accordingly demanded to have small sizes.

It is additionally desired for the same purpose to mount the high frequency device 1 on the top of an antenna tower. As the top of an antenna tower however offers a limited installation area, the high frequency device 1 is demanded to have small overall dimensions for ensuring the installation. Further, the high frequency device 1 is demanded to have a small size to be installed at the top of the antenna tower, and accordingly to have a small weight.

### SUMMARY OF THE INVENTION

A high frequency device includes an antenna connector adapted to be connected with an antenna, a board, a conductor layer provided on an upper surface of the board, a filter mounted on the upper surface of the board and connected with the antenna connector, and a high frequency circuit mounted on a lower surface of the board and connected with the filter. The filter includes a case having a hollow shape having an opening which opens downward, and a resonator accommodated in the case. The case has a lower end around the opening. The lower end of the case is joined to the conductor layer.

The high frequency device has a small size.

### BRIEF DESCRIPTION OF THE DRAWINGS

Fig. 1 is a circuitry block diagram of a high frequency device according to an exemplary embodiment of the present invention.
Fig. 2A is a cross sectional view of the high frequency device according to the embodiment.
Fig. 2B is an enlarged cross sectional view of a case of the high frequency device according to the embodiment.
Fig. 2C is an enlarged cross sectional view of another case of the high frequency device according to the embodiment.
Fig. 3 is an enlarged cross sectional view of the high frequency device according to the embodiment.
Fig. 4 is an enlarged cross sectional view of a heat sink of the high frequency device according to the embodiment.
Fig. 5A is an enlarged cross sectional view of another heat sink of the high frequency device according to the embodiment.
Fig. 5B is an enlarged cross sectional view of still another heat sink of the high frequency device according to the embodiment.
Fig. 6A is an enlarged cross sectional view of another high frequency device according to the embodiment.
Fig. 6B is an enlarged cross sectional view of still another high frequency device according to the embodiment.
Fig. 7A is an enlarged cross sectional view of the high frequency device according to the embodiment.
Fig. 7B is an enlarged cross sectional view of another high frequency device according to the embodiment.
Fig. 8 is a side view of a conventional high frequency device.

### DETAIL DESCRIPTION OF PREFERRED EMBODIMENT

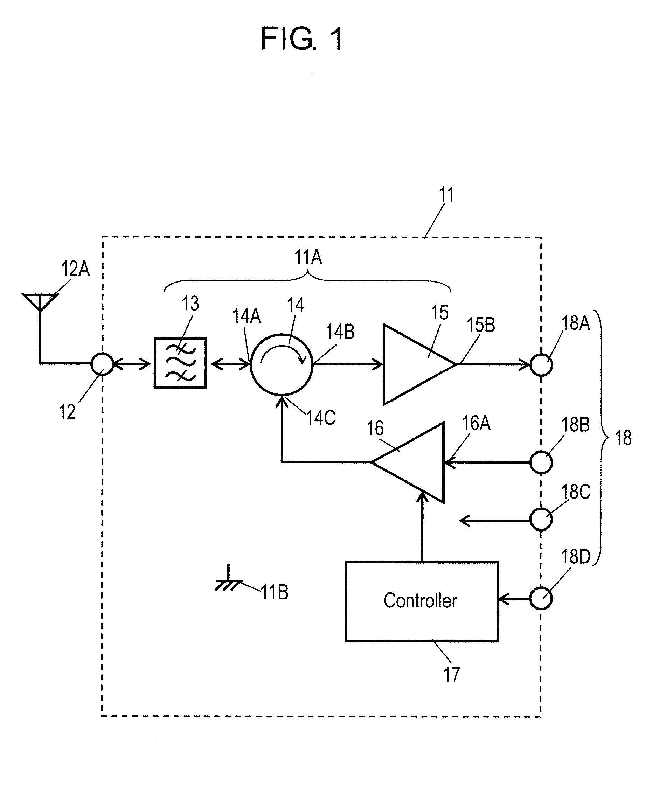

Fig. 1 is a circuitry block diagram of a high frequency device 11 according to an exemplary embodiment of the present invention. The high frequency device 11 is adapted to be used in a TDMA communications system, and may be used in any applicable communications system such as a CDMA system. An antenna connector 12 functioning as an antenna terminal is adapted to be connected with an antenna 12A. More specifically, a reception signal received by the antenna 12A is supplied to the antenna connector 12 while a transmission signal supplied from a filter 13 is transferred via the antenna connector 12 to the antenna 12A for transmission. Alternatively, only one of the operation in which the reception signal received by the antenna 12A is supplied to the antenna connector 12 and the operation in which the transmission signal is supplied from the filter 13 via the antenna connector 12 to the antenna 12A may be executed exclusively.

A circulator 14 has three ports, an input/output port 14A, an output port 14B, and an input port 14C. The input/output port 14A is connected to the filter 13. The output port 14B is connected to a low noise amplifier (LNA) 15 while the input port 14C is connected to a power amplifier (PA) 16. The reception signal received by the antenna 12A is transferred via the antenna connector 12 to the filter 13. The filter 13 filters and transfers the reception signal to the input/output port 14A of the circulator 14. The circulator 14 transfers the reception signal filtered by the filter 13 to the output port 14B and the transmission signal received from the PA 16 to the input/output port 14A. The circulator 14, the LNA 15, and the PA 16 constitute a high frequency circuit 11A. In other words, the high frequency circuit 11A includes the LNA 15 and the PA 16.

A controller 17 controls the turning on and off and the gain of the PA 16 while detecting an error of the gain of the PA 16 and notifying the malfunction of the PA 16. Plural connectors 18 are connected with the controller 17, the LNA 15, and the PA 16. According to this embodiment, the output port 15B of the LNA 15 is connected to an output connector 18A. The input port 16A of the PA 16 is connected to an input connector 18B. A power supply connector 18C is adapted to supply power to the controller 17, the LNA 15, and the PA 16. A connector 18D is connected to the controller 17.

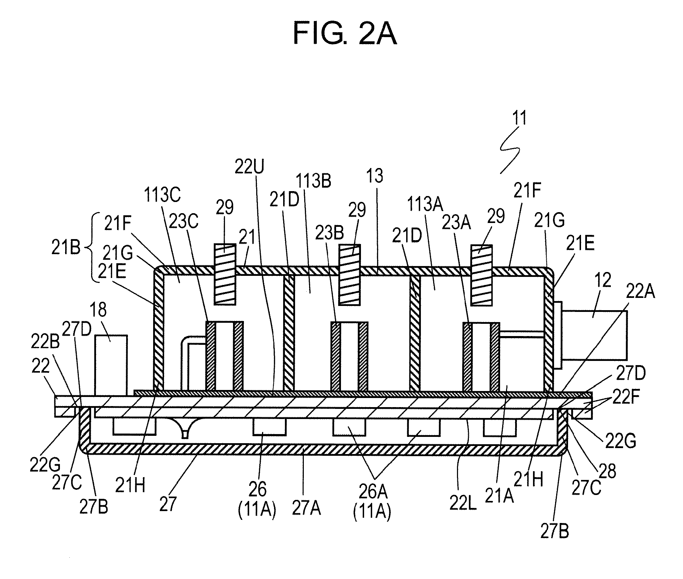

The structure of the high frequency device 11 will be described below. Fig. 2A is a cross sectional view of the high frequency device 11.

The filter 13 according to the embodiment is an air cavity type filter having a passing bandwidth of 3 GHz and having three cavities 13A to 13C. The filter 13 includes a case 21, a board 22, and resonators 23A to 23C. The case 21 is made of a metallic material. The antenna connector 12 is fixed to a side surface of the case 21 with, e.g. screws. A grounding layer 22B is provided in the board 22.

The case 21 includes a box shell 21B and partitions 21D. The box shell 21B has a hollow shape having an opening 21A provided in a lower surface thereof. The box shell 21B includes a top plate 21F and a frame 21E extended downward from an entire outer periphery 21G of the top plate 21F. The case 21 may preferably be formed by punching and bending a surface treated steel plate by, e.g., a pressing process. In this case, the box shell 21B and the partitions 21D accommodated in the box shell 21B are formed separately and joined together by, e.g., soldering to complete the case 21.

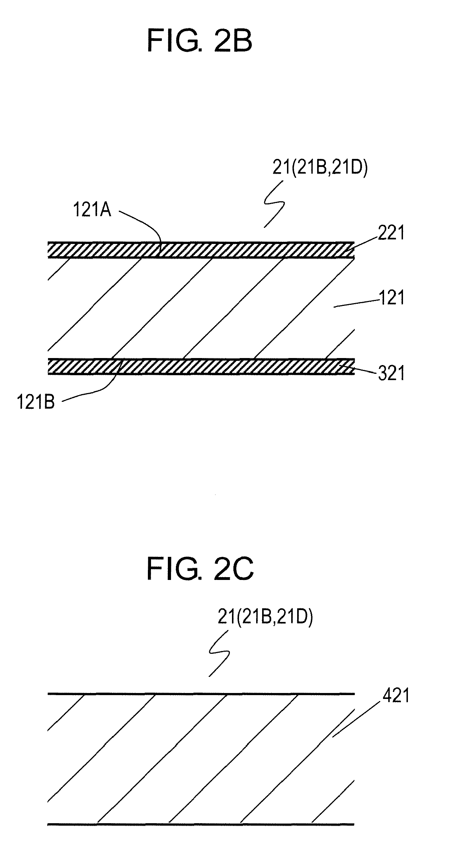

Fig. 2B is an enlarged cross sectional view of the case 21. Each of the box shell 21B and the partitions 21D in the case 21 includes a metal plate 121 and metallic layers 221 and 321 provided on both surfaces 121A and 121B of the metal plate 121, respectively. The metallic layers 221 and 321 have high thermal conductivity. The thermal conductivity of the metallic layers 221 and 321 are higher than that of the metal plate 121. The metallic layers 221 and 321 are made of solderable metal. Fig. 2C is an enlarged cross sectional view of another case 21. Each of the box shell 21B and the partitions 21D in the case 21 includes a metal plate 421 made of solderable metal having high thermal conductivity. According to the embodiment, the box shell 21B includes the metal plate 121 and the metallic layers 221 and 321 shown in Fig. 2B. The metal plate 121 is made of cold-rolled steel. The metallic layers 221 and 321 are made of copper and formed by plating both surfaces of the metal plate 121 with copper. The partitions 21D are made of the metal plate 421 shown in Fig. 2C. The metal plate 421 is a copper plate. Alternatively, the metallic layers 221 and 321 in the box shell 21B can be made of silver. The metal plate 421 of the partitions 21D may be a silver plate. Each of the partitions 21D can include the metal plate 121 made of cold-rolled steel and metallic layers 221 and 321 provided by plating the plate with silver or copper, as shown in Fig. 2B. The case 21 including the box shell 21B and the partitions 21D may be shaped unitarily by, e.g., aluminum die-casting. In this case, the metal plate 121 shown in Fig. 2B is made of aluminum die-casted material while the metallic layers 221 and 321 provided on both surfaces of the metal plate 121 are made by silver plating. The partitions 21D and the metallic layers 221 are 321 are made of the same metal.

The board 22 includes an insulating board 22F having an upper surface 22U and a lower surface 22L and is made of insulating material. The grounding layer 22B extends in the insulating board 22F in parallel with both the upper surface 22U and the lower surface 22L. A conductor layer 22A is provided on the upper surface 22U of the board 22. The case 21 is mounted on the board 22 such that the opening 21A is closed with the conductor layer 22A.

The resonators 23A to 23C are accommodated in the cavities 113A to 113C, and surrounded by the conductor layer 22A, the box shell 21B, and the partitions 21D of the case 21, respectively. The resonators 23A to 23C are placed directly on the conductor layer 22A and spaced from the case 21. The case 21 and the conductor layer 22A are joined to each other by soldering. Alternatively in the high frequency device of this embodiment, the resonators 23A to 23C can be connected to the case 21 and spaced from the conductor layer 22A.

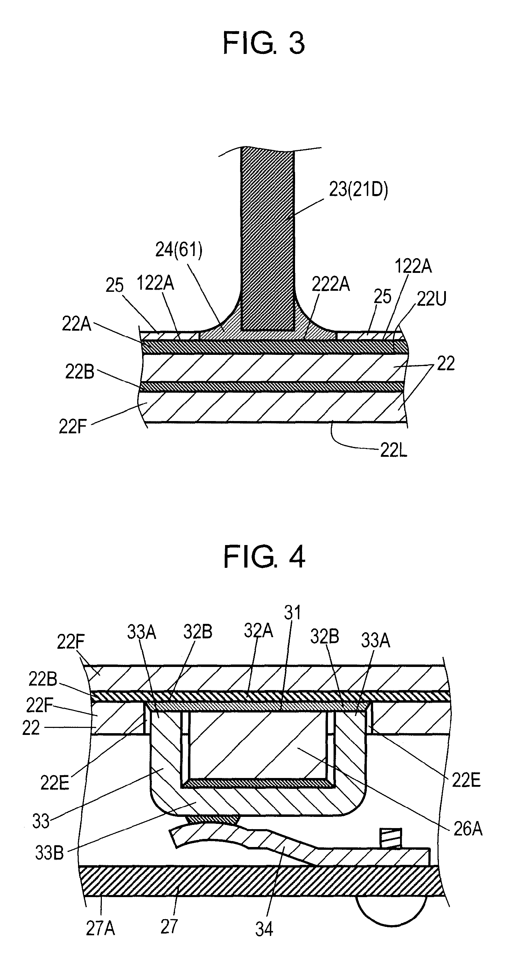

Fig. 3 is an enlarged cross sectional view of the high frequency device 11. An insulating film 25 is provided on the upper surface 122A of the conductor layer 22A so as to allow the upper surface 122A of conductor layer 22A to have exposed regions 222A exposed from the insulating film 25. The exposed regions 222A of the upper surface 122A having the insulating film 25 not provided thereon are located directly beneath the resonators 23A to 23C and the case 21. This arrangement allows the resonators 23A to 23C and the case 21 to be joined with a joining material 24 to the upper surface 122A onto the exposed regions 222A of the conductor layer 22A. The joining material 24 is made of conductive material, such as solder. A lower end 2H of the frame 21E around the opening 21A of the case 21 is jointed to the conductor layer 22A with a joining material 61. The joining material 61 according to this embodiment can be a solder.

The shape and amount of the joining material 24 significantly affects the characteristics, such as an insertion loss, of the filter 13. In the filter 13 of the air-cavity type, electric charges may intensively be accumulated at corners of the cavities 113A to 113C. If the shape at the joint between each of the resonators 23A to 23C and the conductor layer 22A or at the joint between the case 21 and the conductor layer 22A has an acute angle, electric charges tend to accumulate at the acute joint, hence deteriorating the characteristics of the filter. The size of the exposed regions 222A having the insulating film 25 not provided on the upper surface 122A of the conductor layer 22A is determined such that the shape of the joining material 24 has no portion having an acute angle. This shape provides the filter 13 with a small insertion loss. This shape reduces variation of the amount of the joining material 24, such as a solder, and reduces the variation of the shape at the corners, accordingly reducing the variation of the characteristics of the filter 13 and the high frequency device 11.

The case 21 is placed on the upper surface 22U of the board 22. The conductor layer 22A functions as a cover of the case 21 of the filter 13 defining the cavities 113A to 113C provided in the filter 13. This structure does not require another cover, thus eliminating the use of molding dies and fabricating the filter 13 at lower cost. Amplifiers 26A and other electronic components 26 constituting the high frequency circuit 11A and the controller 17 are mounted onto the lower surface 22L of the board 22. The amplifier 26A is an electronic device of surface-mount type which serves as the LNA 15 or the PA 16 of the high frequency circuit 11A. The electronic components 26 are of surface-mount type for producing a peripheral circuit of the high frequency circuit 11A and the controller 17. A metal cover 27 shielding the high frequency circuit 11A is mounted onto the lower surface 22L of the board 22 to cover the electronic components 26 and the amplifiers 26A. The cover 27 includes a bottom plate 27A and a side plate 27C which extends upward from an entire outer periphery 27B of the bottom plate 27A. The side plate 27C has an upper end 27D jointed to the board 22. Thus, while the filter 13 is mounted on the upper surface 22U of the board 22, the circulator 14, the LNA 15, the PA 16, and the controller 17 are mounted on the lower surface 22L of the same, hence providing the high frequency device 11 with small overall dimensions.

The structure for dissipating heat generated by the amplifier 26A of the high frequency device 11 will be described in detail below. As shown in Fig. 2A, the partitions 21D are located directly above the amplifier 26A. This arrangement facilitates transmitting the heat generated by the amplifier 26A to the partitions 21D via the board 22. The heat received by the partitions 21D is then released out from the box shell 21B. As the heat generated by the amplifier 26A is released out from the case 21 of the filter 13, the high frequency device 11 does not require an extra heat sink, accordingly being manufactured inexpensively at high productivity. The partitions 21D according to this embodiment are made of copper plates and have high thermal conductivity. Since the heat generated by the amplifier 26A serving as the LNA 15 and the PA 16 is preferably heat-dissipated through the partitions 21D, the high frequency device 11 dissipates the heat efficiently even if the device 11 has a small size and has a small area for dissipating the heat accordingly.

The board 22 according to this embodiment has a multi-layer structure including four conductive layers. The grounding layer 22B is one of the conductive layers. The amplifiers 26A including the LNA 15 and the PA 16 has a ground, that is, a ground 11B of the high frequency circuit 11A is connected to the grounding layer 22B so as to shield the high frequency circuit 11A mounted onto the lower surface 22L of the board 22. This structure facilitates releasing the heat generated by the amplifiers 26A through the grounding layer 22B, accordingly dissipates the heat preferably even if the device 11 has a small size and has a small area for dissipating the heat accordingly. The high frequency device 11 dissipates the heat from the amplifier 26A without the flat mounting board 2 of the conventional high frequency device 1 shown in Fig. 8, hence having a small weight and a small size.

The grounding layer 22B is preferably equal to or larger than the conductor layer 22A as to reduce interference between signals in the filter 13 and the high frequency circuit 11A. The grounding layer 22B and the metal cover 27 provided on the lower surface 22L of the board 22 surrounds and shield high frequency circuit 11A securely.

The cover 27 is formed by punching and bending a surface treated steel plate by, e.g., a pressing process, thereby being inexpensive. The cover 27 can be fabricated not only by the pressing procedures but also by a die-casting process or a cutting process. The cover 27 employs materials or surface treatment to provide high thermal conductivity.

The connector 18 according to this embodiment is mounted on the upper surface 22U of the board 22. This arrangement eliminates an aperture provided in the cover 27 for accessing the connector 18 from an outside of the high frequency device 11, thus shielding the high frequency circuit 11A securely. The connector 18 can be accessed easily from the outside even if a heat sink is mounted to a lower surface of the cover 27.

According to this embodiment, the board 22 has a recess 22G provided in the lower surface 22L thereof so as to locate directly above the side plate 27C of the cover 27. An exposed region 28 of the grinding layer 22B is exposed through the recess 22G. An upper end 27D of the side plate 27C of the cover 27 contacts the exposed region 28 of the grinding layer 22B. The cover 27 and the grinding layer 22B are joined directly with each other, and shield the high frequency circuit 11A securely. The heat generated by the amplifiers 26A serving as the LNA 15 and the PA 16 is efficiently dissipated to the cover 27 via the grounding layer 22B even if the device 11 has a small size and has a small area for dissipating the heat accordingly. According to this embodiment, the cover 27 is fixed to the board 22 with screws but can be joined to the board with, e.g. solder.

According to this embodiment, the conductor layer 22A is electrically isolated from the grounding layer 22B. This structure prevents signals of the high frequency circuit 11A from leaking and prevents signals of the filter 13 from entering to the high frequency circuit 11A.

Adjusting screw 29 is provided at the case 21 above each of the resonators 23A to 23C as to control the band-pass characteristics of the filter 13. The band-pass characteristics of the filter 13 is adjusted by turning the adjusting screws 29 to change the distance between the adjusting screw 29 and each of resonators 23A to 23C. According to this embodiment, the resonators 23A to 23C are placed on the conductor layer 22A while the adjusting screws 29 extend from positions opposite to the board 22. This arrangement allows the bottom plate 27A of the cover 27 to be flat, hence allowing a heat sink to be mounted onto the bottom plate 27A of the cover 27. Further, this arrangement increases the contact area between the cover 27 and the heat sinks, accordingly releasing the heat efficiency.

Fig. 4 is an enlarged cross sectional view of a heat sink 33 of the high frequency device 11 according to the embodiment. A recess 22E is provided in the lower surface 22L of the board 22 so that the grounding layer 22B is exposed at exposed regions 32A and 32B. The amplifier 26A is accommodated in the recess 22E. The exposed region 32A of the grounding layer 22B contacts a grounding port 31 provided on an upper surface of the amplifier 26A. According to this embodiment, the grounding port 31 similarly to electronic components 26 is joined to the grounding layer 22B by soldering. The amplifier 26A has an input port and an output port provided on side surfaces thereof. The input port and the output port of the amplifier 26A are joined by soldering to conductor patterns provided on the lower surface 22L of the board 22. As the grounding port 31 of the amplifier 26A is connected directly to the grounding layer 22B which is exposed at the recess 22E, the heat generated by the amplifier 26A can favorably be released out.

The exposed region 32B of the grounding layer 22B extends continuously to the exposed region 32A and is exposed from the insulating plate 22F and the amplifier 26A. The heat sink 33 surrounds a side and a lower surface of the amplifier 26A. The exposed region 32B of the grounding layer 22B is joined with the upper end 33A of the heat sink 33. The heat sink 33 is thermally coupled to a lower end 33B with the cover 27. This structure allows the heat generated by the amplifier 26A to transmit to the cover 27 near the amplifier 26A, hence dissipating the heat from the amplifier 26A preferably. According to this embodiment, the exposed region 32B is provided as both sides of the amplifier 26A in the recess 22E. The heat sink 33 has a squared C-shape and is has a lower surface 33B connected contacting a contact spring 34 mounted onto an inner surface of the cover 27. This arrangement dissipates the heat effectively from the amplifier 26A.

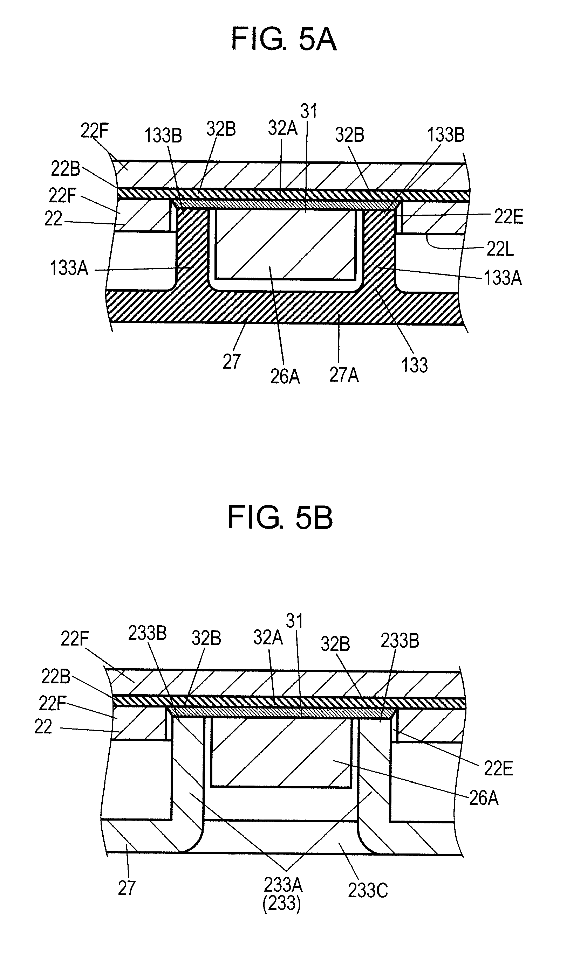

Fig. 5A is an enlarged cross sectional view of another heat sink 133 according to the embodiment. In Fig. 5A, components identical to those of the high frequency device shown in Fig. 4 are denoted by the same reference numerals, and their description will be omitted. The heat sink 133 shown in Fig. 5A has a side plate 133A extending upward from the bottom plate 27A of the cover 27. The side plate 133A has an upper end 133B joined to the exposed region 32B of the grounding layer 22B. The heat sink 133 surrounds a side and a lower surface of the amplifier 26A. More specifically, the heat sink 133 includes the side plates 133A and a portion of the bottom plate 27A of the cover 27m thus being formed unitarily with the cover 27. This structure can eliminate the contact spring 34, hence allowing the high frequency device 11 to be manufactured inexpensively. Alternatively, the side plates 133A of the heat sink 133 may be joined by soldering or screws to the cover 27. As described, the heat sink 133 fixedly joined by soldering, screws, or the contact spring 34, causes the heat sink 33 to contact the cover 27 sufficiently even if a gap is provided between the board 22 and the cover 27 due to manufacturing variations in the dimensions of the cover 27, hence releasing the heat effectively from the amplifier 26A.

Fig. 5B is an enlarged cross sectional view of still another heat sink 233 according to the embodiment. In Fig. 5B, components identical to those of the heat sink 133 shown in Fig. 5A are denoted by the same reference numerals, and their description will be omitted. The heat sink 233 shown in Fig. 5B includes side plates 233A different from the side plates 133A of the heat sink 133 shown in Fig. 5A. The side plates 233A has upper ends 233B joined to the exposed region 32B of the grounding layer 22B. The side plates 233A is shaped by bending portions of the bottom plate 27A of the cover 27 upward. This process provides an aperture 233C in the cover 27 directly beneath the amplifier 26A. As the amplifier 26A is exposed from the aperture 233C provided in the cover 27, the heat generated by the amplifier can be released out efficiently by air flowing into the aperture 233C.

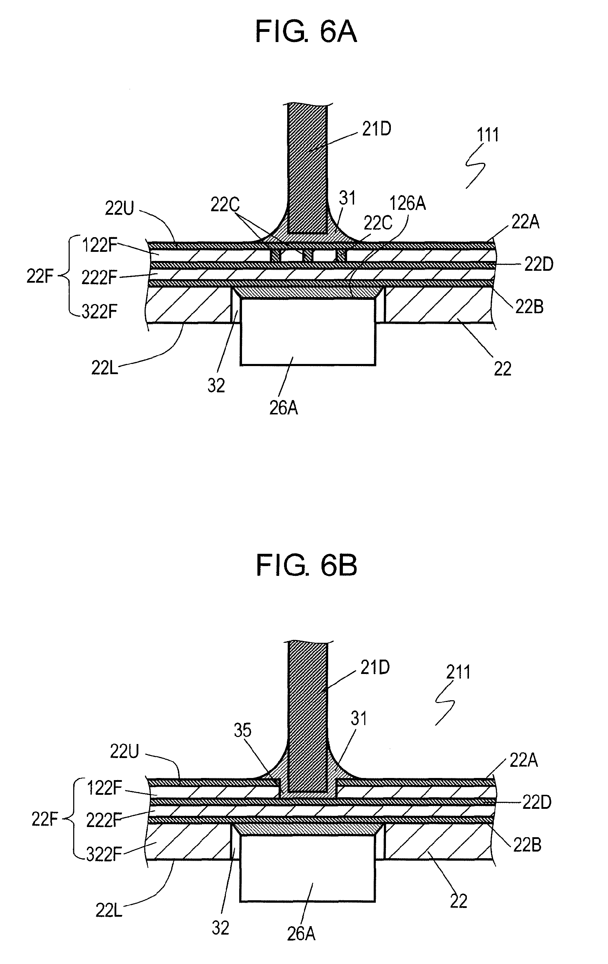

Fig. 6A is an enlarged cross sectional view of another high frequency device 111 according to this embodiment. In Fig. 6A, components identical to those of the high frequency device 11 shown in Fig. 2A are denoted by the same reference numerals, and their description will be omitted. The high frequency device 111 shown in Fig. 6A further includes a grounding layer 22D provided between the conductor layer 22A and the grounding layer 22B. The grounding layer 22D is patterned in a predetermined shape. The insulating board 22F includes an insulating layer 122F provided between the upper surface 22U and the grounding layer 22D, an insulating layer 222F provided between the grounding layers 22D and 22B, and an insulating layer 322F provided between the grounding layer 22B and the lower surface 22L. Via-conductors 22C are provided directly above the amplifier 26A in the insulating layer 122F for connecting between the conductor layer 22A and the grounding layer 22D. The via-conductors 22C transmit the heat efficiently from the amplifier 26A to the partition 21D. The area of the grounding layer 22D is preferably greater than a bottom area of the amplifier 26A. This arrangement dissipates the heat from the amplifier 26A even if the device 111 has a small size and has a small area for dissipating the heat accordingly. Further, the heat can be dissipated from the amplifier 26A without the flat mounting board 2 of the conventional high frequency device 1 shown in Fig. 8, hence providing the high frequency device 111 with a small weight and a small size.

Fig. 6B is an enlarged cross sectional view of a further high frequency device 211 according to the embodiment. In Fig. 6B, components identical to those of the high frequency device 111 shown in Fig. 6A are denoted by the same reference numerals, and their description will be omitted. The high frequency device 211 shown in Fig. 6B includes the partition 21D of the case 21 joined directly to the grounding layer 22D without the via-conductors 22C of the high frequency device 111 shown in Fig. 6A. More particularly, recess 35 is provided in the upper surface 22U of the insulating board 22F of the board 22 for exposing the grounding layer 22D from the insulating layer 122F. The recess 35 is located directly beneath the lower end 21H of the partition 21D. The lower end 21H of the partition 21D is joined to the grounding layer 22D with a joining material 61, such as a solder. This structure allows the heat to transmit from the amplifier 26A to the grounding layer 22D and further dissipated via the joining material 61 to the partition 21D, thus dissipating the heat from the amplifier 26A effectively. The recess 35 can have a metal layer on the recess. The metal layer facilitates the dissipation of the heat through the case 21.

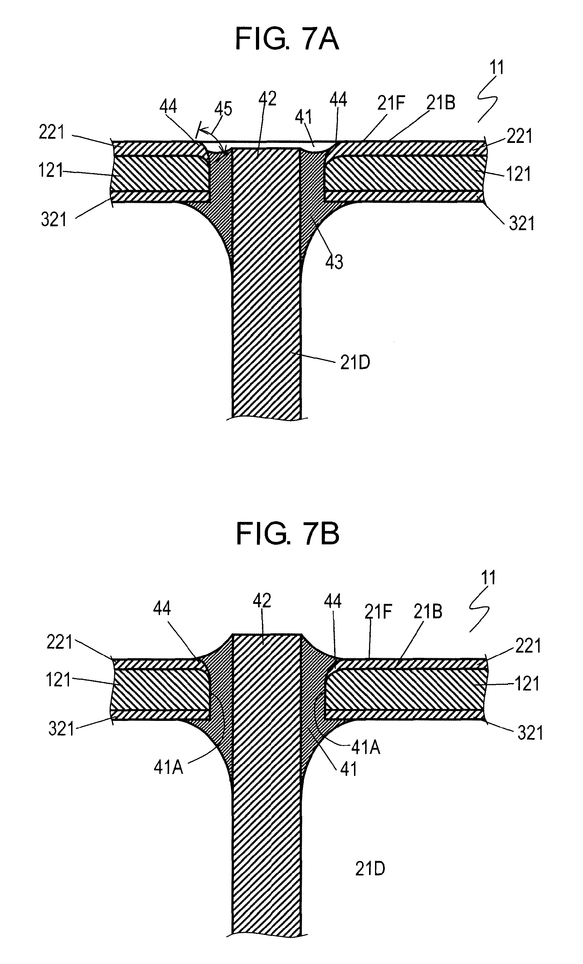

Figs. 7A and 7B are enlarged cross sectional views of the case 21 of the high frequency device 11 according to the embodiment. A slit 41 is provided in the top plate 21F of the box shell 21B for accepting the upper end 42 of the partition 21D. In Fig. 7A, the upper end 42 of the partition dose not protrude upward from the top plate 21F of the box shell 21B. In Fig. 7B, the upper end 21 of the partition protrudes from the top plate 21F of the box shell 21B. The upper end 42 of the partition 21D is inserted into the slit 41 provided in the top plate 21F of the box shell 21B and is joined to the top plate 21F with a joining material 43 made of metal, such as solder. As shown in Fig. 2B, the top plate 21F includes the metal plate 121 and metallic layers 221 and 321 provided on both surfaces of the metal plate 121. The metallic layer 221 is located on an outer surface of the metal plate 121 while the metallic layer 321 is located on an inner surface of the metal plate 121. The joining material 43 is joined to the metallic layer 221 provided at the outer surface of the top plate 21F. The metallic layer 221 has higher thermal conductivity than the metal plate 121, and can dissipate the heat easily from the partition 21D to the box shell 21B.

According to this embodiment, the slit 41 is formed by punching the top plate 21F of the box shell 21B in a direction from the metallic layer 221 to the metal plate 121. The punching often produces rounded corners 44 at the outer surface of the top plate 21F. More particularly, the metallic layer 221 has extended surfaces 45 thereof extending from an inner wall 41A at the slit 41. The extended surfaces 45 is connected with the joining material 43, and increase the joining area between the metallic layer 221 and the joining materials 43, accordingly transmitting the heat from the partition 21D to the box shell 21B effectively.

According to the embodiment, terms, such as "upper surface", "lower surface", "upward", "downward", "directly beneath", "top (plate)", and "bottom (plate)", suggesting direction indicate relative directions depending only on the positions of components, such as the case 21, board 22, resonators 23A to 23C, of the high frequency device 11, but do not indicate absolute directions, such as a vertical direction.

## Claims

1. A high frequency device comprising:
an antenna connector adapted to be connected with an antenna;
a board having an upper surface and a lower surface;
a conductor layer provided on the upper surface of the board;
a filter mounted on the upper surface of the board and connected with the antenna connector; and
a high frequency circuit mounted on the lower surface of the board and connected with the filter, wherein
the filter includes
a case having a hollow shape having an opening which opens downward, the case having a lower end around the opening, and
a resonator accommodated in the case, and
the lower end of the case is joined to the conductor layer.

2. The high frequency device according to claim 1, further comprising:
an insulating layer provided on the conductor layer such that the conductor layer has an upper surface having a first exposed region exposed from the insulating layer; and
a first joining material joining the lower end of the case to the first exposed region of the upper surface of the conductor layer.

3. The high frequency device according to claim 6, further comprising
a second joining material for joining the resonator to the conductor layer, wherein
the upper surface of the conductor layer further has a second exposed region exposed from the insulating layer, and
the resonator is joined to the second exposed region of the upper surface of the conductor layer with the second joining material.

4. The high frequency device according to claim 1, wherein the high frequency circuit includes an amplifier.

5. The high frequency device according to claim 4, wherein
the amplifier includes a grounding port, and
the board includes
an insulating board having an upper surface and a lower surface which are the upper surface and the lower surface of the board, respectively, and
a grounding layer provided in the insulating board and connected with the grounding port of the amplifier.

6. The high frequency device according to claim 5, further comprising
a cover made of metal and mounted on the lower surface of the board, wherein
the high frequency circuit is mounted on the lower surface of the board, and
the cover covers the high frequency circuit and is connected with the grounding layer.

7. The high frequency device according to claim 5, wherein the grounding layer is isolated electrically from the conductor layer.

8. The high frequency device according to claim 3, wherein
the board has a recess provided in the lower surface thereof such that the ground layer has a first exposed region exposed from the recess,
the high frequency circuit is mounted to the lower surface of the board, and
the grounding port of the amplifier is joined to the first exposed region of the grounding layer.

9. The high frequency device according to claim 6, further comprising
a cover made of metal and mounted on the lower surface of the board; and
a heat sink joined to the grounding layer and the cover, wherein
the high frequency circuit is mounted on the lower surface of the board,
the cover covers the high frequency circuit and is joined to the grounding layer,
the grounding layer further has a second exposed region exposed from the recess and the amplifier, and
the heat sink is joined to the second exposed region of the grounding layer.

10. The high frequency device according to claim 9, wherein the heat sink surrounds a side and a lower surface of the amplifier.

11. The high frequency device according to claim 2, wherein
the case includes a box shell and a partition provided in the box shell, the partition separating an inside of the box shell into a plurality of cavities, the partition having an upper end thereof joined to the box shell and a lower end thereof joined to the board, and
the amplifier is located directly beneath the partition.

12. The high frequency device according to claim 11, wherein
the box shell includes a metal plate and a metallic layer provided on an outer surface of the metal plate, the metallic layer having a higher thermal conductivity than the metal plate,
the box shell has a slit provided therein for accepting the upper end of the partition inserted through the slit, and
the case further includes a joining metal for joining the upper end of the partition to the metallic layer of the box shell.

13. The high frequency device according to claim 12, wherein the partition and the metallic layer of the box shell are made of the same metal.

14. The high frequency device according to claim 11, wherein
the high frequency circuit has a ground,
the board includes
an insulating plate having an upper surface and a lower surface which are the upper surface and the lower surface of the board, respectively, and
a grounding layer provided in the insulating plate and connected with the ground of the high frequency circuit, and
the lower end of the partition is connected to the grounding layer of the board.

15. The high frequency device according to claim 14, further comprising a conductor located directly above the amplifier and joining between the grounding layer and the conductor.
